# EUROPEAN PATENT SPECIFICATION

(11) **EP 4 115 962 B1**
(45) Date of publication and mention of the grant of the patent: **07.10.2026**
(21) Application number: 21764342.8
(22) Date of filing: 09.02.2021
(51) Int. Cl.: B01D 11/02, C22B 3/08, C22B 7/02, C22B 19/30, B03D 1/02, B01D 9/00, B03D 1/004, B03D 1/008, B03D 1/018, B03D 1/08, B03D 1/06, C22B 1/06, C22B 11/00, C22B 3/00, B03D 1/012, C22B 1/00

(54) **HYDROMETALLURGICAL METHOD FOR SIMULTANEOUSLY EXTRACTING METALS AND GYPSUM FROM THE DUST OF A STEELWORKS ELECTRIC ARC FURNACE**
HYDROMETALLURGISCHES VERFAHREN ZUR GLEICHZEITIGEN EXTRAKTION VON METALLEN UND GIPS AUS DEM STAUB EINES ELEKTROLICHTBOGENOFENS FÜR STAHLWERKE
PROCÉDÉ HYDROMÉTALLURGIQUE POUR L'EXTRACTION SIMULTANÉE DE MÉTAUX ET DE GYPSE DES POUDRES DE FOUR À ARC ÉLECTRIQUE D'ACIÉRIES

(30) Priority: 02.03.2020 PE 0003022020
(43) Date of publication of application: 11.01.2023
(73) Proprietor: Bonelli Arenas, Julio Domingo, La Molina Lima, 15024 (PE); Ramirez Ostgolaza, Jose Enrique, Santiago de Surco Lima, 15037 (PE); Vera Fernandez, Adolfo Fernando, Santiago de Surco Lima, 15024 (PE); Araujo Fernandez, Luis Alejandro, Santiago de Surco Lima, 15024 (PE); Quintanilla Morales, Joel Omar, Santiago de Surco Lima, 15054 (PE)
(72) Inventor: Bonelli Arenas, Julio Domingo, La Molina Lima, 15024 (PE); Ramirez Ostgolaza, Jose Enrique, Santiago de Surco Lima, 15037 (PE); Vera Fernandez, Adolfo Fernando, Santiago de Surco Lima, 15024 (PE); Araujo Fernandez, Luis Alejandro, Santiago de Surco Lima, 15024 (PE); Quintanilla Morales, Joel Omar, Santiago de Surco Lima, 15054 (PE)
(74) Representative: Balder IP Law, S.L.
(86) International application number: PCT/PE2021/000002
(87) International publication number: WO 2021/177843

(56) References cited:
- EP-A1- 2 902 510
- WO-A1-2020/107122
- US-A- 4 440 569
- US-A- 4 440 569
- US-A- 4 610 721
- US-A- 4 614 543
- US-A- 4 614 543
- US-A- 5 286 465
- US-A- 5 286 465
- US-A1- 2005 069 474
- US-A1- 2005 069 474
- US-A1- 2019 233 302
- US-A1- 2019 233 302
- ANTU�ANO N ET AL: "Hydrometallurgical processes for Waelz oxide valorisation - An overview", PROCESS SAFETY AND ENVIRONMENTAL PROTECTION, INSTITUTION OF CHEMICAL ENGINEERS, RUGBY, GB, vol. 129, 20 July 2019 (2019-07-20), pages 308 - 320, XP085782713, ISSN: 0957-5820, [retrieved on 20190720], DOI: 10.1016/J.PSEP.2019.06.028
- DIMITRIOS FILIPPOU: "INNOVATIVE HYDROMETALLURGICAL PROCESSES FOR THE PRIMARY PROCESSING OF ZINC", MINERAL PROCESSING AND EXTRACTIVE METALLURGY REVIEW, vol. 25, no. 3, 1 July 2004 (2004-07-01), US, pages 205 - 252, XP055243809, ISSN: 0882-7508, DOI: 10.1080/08827500490441341

## Description

### TECHNICAL FIELD:

The present invention pertains to the technical field of steelmaking, specifically relating to a new hydrometallurgical method for recovering valuable metals from steelmaking waste, and it more specifically relates to a new hydrometallurgical method for extracting and recovering valuable metals from electric arc furnace dust produced by the steelmaking industry (steelworks) worldwide, such as zinc, lead, silver, iron and calcium, in the form of industrial products, from treating complex oxides.

### STATE OF THE ART:

The known electric arc furnaces used for producing steel are fed with industrial scrap, and this scrap is a complex consisting of metallic compounds from the chemical point of view, as it typically has as constituents Fe, Zn, Pb, Mg, Mn, Cl, Ca, percentagewise; Cr, Cd, Ag, P, Sn, in parts per million (ppm); and furthermore several chemical elements in parts per billion (ppb).

The average or standard chemical composition of electric arc dust is the following:

**Table 1. Composition of electric arc furnace dust**

| Element | % | Element | % | Element | ppm | Element | ppm |
|---|---|---|---|---|---|---|---|
| Fe | 18.30 | C | 0.97 | Cr | 2,378 | Ag | 102 |
| Zn | 19.50 | Si | 1.80 | Sn | 1,710 | Bi | 92 |
| Cl | 4.52 | Mg | 0.85 | P | 1,228 | V | 57 |
| Pb | 1.60 | Al | 0.43 | Ba | 898 | As | 33 |
| Na | 0.87 | S | 0.37 | Cd | 648 | Zr | 21 |
| Ca | 2.62 | Cu | 0.23 | Sb | 500 | Co | 20 |
| K | 0.85 | Ti | 0.10 | Sr | 179 | Hg | 5 |
| Mn | 1.92 | | | Ni | 145 | Mo | 5 |

Electric arc furnace dust is generated inside the electric arc furnace at temperatures higher than 1,300 °C.

Depending on the geographic location, electric arc furnace dust chemical composition percentage varies, because steels produced before being converted to scrap have had various uses and various corrosion protection systems (galvanising, paints, plastics) or a component of an alloy (chromium, nickel, etc.) which allow it to have special properties, suited to each specific local need local specific. The content of zinc, which is in the ranges of 12 % to 35 %, essentially varies.

The generation of electric arc furnace dust has a range which varies from 11 kg to 17 kg per metric ton of steel produced, which indicates that per million metric tons of steel produced by the electric arc furnaces, between 11,000 and 17,000 annual metric tons of electric arc furnace dust are generated. The lifetimes of steelworks are very long and, for that reason, over time, this waste becomes considerable in volume, but also risky because electric arc furnace dust is considered hazardous for the environment and for human and animal health due to the presence of some toxic elements such as lead, cadmium, arsenic, mercury among others.

Existing pyrometallurgical and hydrometallurgical methods for recovering or extracting metals such as zinc, lead, silver, iron and calcium of electric arc furnace dust cannot prevent the generation of solid waste with a hazardous content, so it is not possible, with the current state of the art, to recover the aforementioned metals without preventing industrial landfills and the constant risk of environmental pollution and health hazards.

Moreover, in the current state of the art there is no pyrometallurgical method, hydrometallurgical method, or a combination of both, which recovers simultaneously and in a single method all the valuable content of zinc, lead, silver, iron and calcium from electric arc furnace dust, moreover converting the non-metallic contents of electric arc furnace dust into commercial final products, without generating solid waste or liquid effluents.

With respect to pyrometallurgical methods, the Waelz kiln process, which is the most widely used process to recover zinc from electric arc furnace dust, takes zinc to the gas phase by using a high temperature (between 1,000 °C and 1,500 ^{O}C), surpassing the boiling point of zinc, using metallurgical coal (coke) as a reducer, producing zinc oxide (ZnO).

This process does not recover all the metals, such as the iron lost in the process slag (Waelz slag). Additionally, other metals such as calcium and aluminium are lost in this slag. This process obtains only the intermediate product zinc oxide (Waelz oxide) which still needs to go through a refinery to obtain final zinc.

The Waelz kiln process, in general, has the drawback of producing intermediate metallurgical products because the zinc oxide produced requires subsequent metallurgical treatment, does not recover iron, generates slag, and uses a great deal of energy in the process. Moreover, this method is not designed to be implemented in small steelmaking plants which generate less than 20,000 metric tons of electric arc furnace dust per year.

The Waelz kiln process needs an order of magnitude of 100,000 metric tons of electric arc furnace dust per year, a volume that far exceeds the annual generation of this waste in several steelworks located in different countries, which amounts to about 30,000 metric tons per year.

Other pyrometallurgical methods similar to the Waelz kiln process, such as, for example, Primus, PIZO, ESRF, Mitsumi, electrothermal furnace, flame reactor, daido furnace; produce, in general, the same product as the Waelz kiln process, in other words, crude zinc oxide (CZO), which requires subsequent treatments such as the IS (imperial smelting) process or conventional electrodeposition methods to obtain electrolytic zinc.

In general, existing pyrometallurgical methods in the state of the art are methods that produce intermediate metallurgical products that need subsequent metallurgical methods so as to be able to obtain and use on an industrial level the generated zinc. Moreover, they do not recover iron and generate solid waste, such as slag, containing most of the non-metallic components and several hazardous metals, in addition to liquid effluents which need to be processed in treatment plants.

With respect to existing hydrometallurgical methods in the state of the art, acid leaching or caustic leaching are known, which also produce zinc oxides (ZnO) as intermediate metallurgical products which subsequently need electrodeposition methods to obtain zinc. These methods do not recover iron and use chemical agents (acids and bases) for subsequent selective zinc leaching methods.

There are also the EZINEX, ZINCEX, and RECUPAC leaching methods, which use chemicals, based on acidic chlorine, sulphuric, ammonia-based or organic chemical solutions, which are a variation of those mentioned above. Said methods, as in the preceding methods, have the same limitations of producing intermediate metallurgical products and do not allow for the simultaneous recovery of all the heavy metals (Cd, As, Sb). Moreover, they produce solid waste and liquid effluents which need to be processed in treatment plants.

The hydrometallurgical methods mentioned in the above paragraph, with respect to leaching, show advantages and drawbacks with respect to acid or alkaline leaching. While high dissolution kinetics and reagent availability are desirable, it is necessary to also deal with low selectivity, which is of high importance in electric arc furnace dust due to the presence of other chemical elements.

Due essentially to the fact that both types of leaching cannot efficiently break up ferrites (Fe₂O₃.ZnO) with chemicals in solution, which inevitably produces zinc losses in the insoluble iron and the presence of iron in zinc solutions, and moreover compromises the quality of the solutions e insoluble elements and produces a great deal of complexity with the presence of other metals present (Cd, As, Sb).

Consequently, both types of leaching do not recover the iron, and its insoluble elements constitute industrial waste; and, moreover, they are not able to recover valuable elements simultaneously (Zn, Fe, Pb, Ag), and also lack the capability to completely remove hazardous constituents (As, Sb, Cd, Hg, Co, etc.).

It should be noted that hydrometallurgical methods using sulphuric acid, hydrochloric acid, nitric acid, ammonia, sodium hydroxide, ammonium chloride, calcium chloride, as a leachate, organic compounds as extractive media, high-pressure leaching generating method waste (insoluble elements or precipitates) or liquid effluents (wastewater), is unrelated to the new method developed.

For example, US5286465A discloses a hydrometallurgical process for recovering iron and zinc from the baghouse dust generated in steel production and other metallurgical operations. The process of separating zinc-rich iron and iron-rich fractions from said dust comprises leaching the dust by hot concentrated sulfuric acid and separating the precipitate by filtration and subsequent washing.

US2019/233302A1 discloses a method of recovering ferrous sulfate contained in a zinc sulfate solution as ferric oxide in the form of hematite, the method comprising reducing the zinc sulfate solution and precipitating iron as hematite, including a step of pressurizing and oxidizing, at certain temperature and pressure and oxidation-reduction potential.

US2005/069474A1 discloses a method for the removal of iron as hematite from a zinc sulphate solution in atmospheric conditions during the electrolytic preparation of zinc.

US4610721A discloses a sulfuric acid leaching process for selectively recovering zinc from steel plant dust.

### DETAILED DESCRIPTION OF THE INVENTION:

The invention is defined by claims 1 to 15. The new hydrometallurgical method developed is capable of treating any type of electric arc dust and recovers, by simultaneously extracting zinc, lead, silver, iron and calcium, in the form of industrial products; zinc as zinc sulphate or zinc cathodes; lead and silver as a concentrate of lead and silver; iron as reduced elemental iron for return to the electric arc furnace; and, lastly, calcium as gypsum.

Moreover, no solid waste or liquid effluents are generated with the new method, which is an important advantage as electric arc furnace dust is considered a hazardous waste that increases each year. Industrial metals thereby return to the industry, and the need for continuous and growing landfills for waste is eliminated, mitigating the potential risk to the environment and human and animal health.

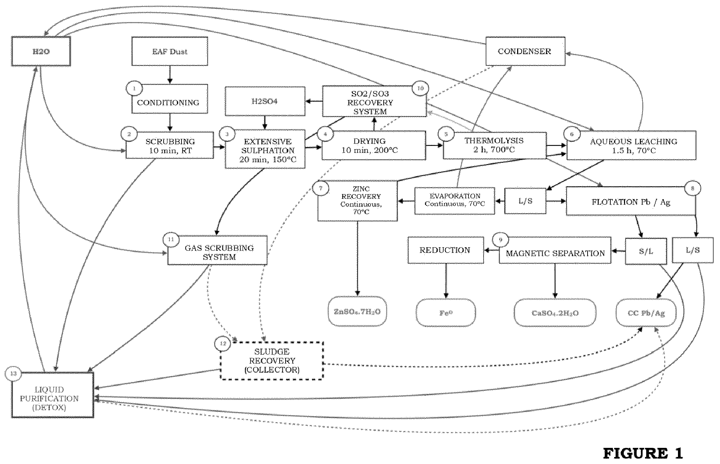

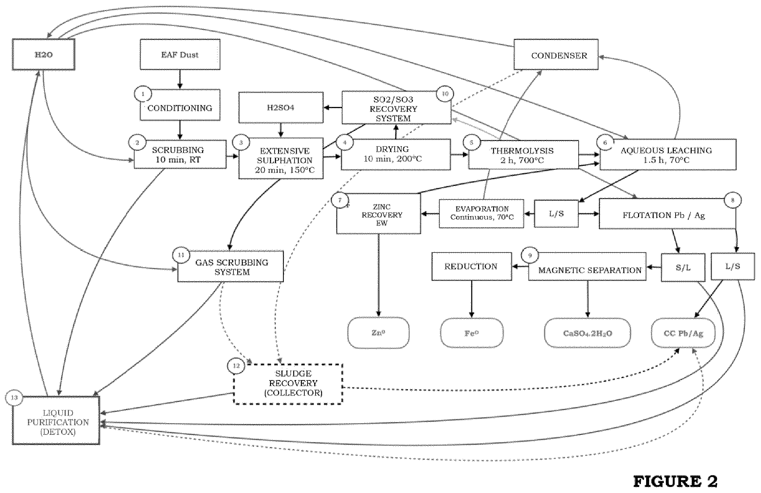

The synergy achieved with the invented method is due to the integration of its different steps, a diagram of which is detailed in Figures 1 and 2, and to the efficient handling of the intermediate products being generated throughout the method.

Unlike the pyrometallurgical and hydrometallurgical methods present in the state of the art and used for treating and recovering materials from the dust of a steelworks electric arc furnace, the invented method has been developed based on the consideration that electric arc furnace dust is a mixture of complex oxides and not solid solutions such as (M1/M2)ₓO_{y}, but rather agglomerations such as M1O.M2ₓO_{y} (ferrites), particle sizes in the range of 0.17 micra to 6.76 micra, are very fine dust, have a large surface area, are agglomerated naturally in a very easy manner. The alkali and alkaline elements are in balance with the halogen elements. An important additional aspect is that the average diameter D₅₀ is 0.62 micra, which makes the powder very chemically reactive with high reaction kinetics under certain circumstances.

The dust is generated inside the electric arc furnace at temperatures higher than 1,300 °C, and many of the metals present such as Zn, Pb, Cd, Co, etc., are in the gaseous state and are extracted by gas capture systems. In addition, the balance of the content of molten steel forms a liquid slag in the presence of Fe, Ca, Si, etc. During the blowing process inside the furnace, fine particles of slag and even steel (very fine droplets) are driven through the gas capture systems.

Inside the capture tubes and pipelines, the whole (gases and particles) is cooled on the way, due to the drop in temperature to about 60 °C, and all the metallic gases pass to the solid state, the integrity of which forms what is referred to as electric arc furnace dust.

A fundamental aspect, due to the genesis of the formation thereof inside the electric arc furnace, which is of an oxidising condition due to the addition of gaseous oxygen to the furnace, is that this dust is made up of complex oxides of the forms MₓO_{y}/MO.MₓO_{y}, where M is the metal (Fe, Pb, Zn, etc.) and O is oxygen.

The alkalis, alkalines and halogens present in the scrap are added to this complex, and when they are cooled, they are present in their stable thermodynamic forms under normal conditions. In general, particles having a larger diameter contain more iron.

### STEPS OF THE METHOD

The new hydrometallurgical method developed for the treatment of electric arc furnace dust are shown schematically in Figure 1, and it comprises the following steps described in detail below:

### 1. CONDITIONING:

The purpose of this step is to homogenise and identify the chemical composition of electric arc furnace dust, in other words, the content of zinc, iron, Cl, Pb, Ca, Ag, Cd and Hg in order to know the valuable metals present, of the elements of risk for metallurgical control and balance in the method.

Insofar as electric arc furnace dust, in dry conditions, is very fine, it tends to form gray layers of different sizes, so it is necessary to homogenise them, this action being performed in an encapsulated mixture which produces the homogeneous mixture making up the homogeneous electric arc dust stock, which is stored in encapsulated hoppers preventing the leakage thereof.

The homogeneous electric arc dust stock will enter the method after the chemical analysis thereof has been performed.

The most important aspect is to determine the zinc (17.50 % to 19.50 %) and iron (17.26 % to 28.26 %) grade, in addition to knowing with certainty the content of Cl, Pb, Ca, Ag, Cd and Hg. Therefore, this provides knowledge with the highest possible level of certainty of the valuable metals and elements of risk for metallurgical control and balance in the method.

### 2. SCRUBBING:

The electric arc dust (hereinafter, dust) contains halogens (Cl) and, consequently, alkalis and alkalines, which elements must be removed from the oxide complex because they are detrimental to the following steps of the method.

For this purpose, the homogenised dust is transported from the encapsulated hoppers to the scrubbing tanks, which are encapsulated tanks so as to prevent the possibility of dust leaking and to send the water vapours to the evaporation and condensation systems, having with a suction system which allows operating at a negative a pressure, 0.97 atmospheres.

The water comes from the condensed water feed system, has an absence of dissolved gases and salts, enters at 80^{O}C, with a mass ratio of 4 to 1. The absence of salts and gases dissolved in the water and the operating temperature confer to the water better properties for dissolving the complexes of Cl, Na, K, Mg, Ca, Ba present in the electric arc furnace dust.

The scrubbing tanks maintain a constant suspension by means of mechanical agitation for 15 minutes in the first part of the scrubbing, and the suspension seeks contact among all the dust particles and the hot condensed water. This phase produces a liquid loaded with the already mentioned soluble complexes, which is sent to a liquid purification unit (DETOX) of the method by means of the liquid / pulp decanting system. The pulp enters a second scrubbing time of 10 minutes, with water having the same characteristics of the method, and the objective is to force a second dissolution of halogens, alkalis, alkalines. Similarly, the decanting system sends the liquid to the liquid purification system, and the previously filtered solids pass to the following phase.

There is obtained a reduction of Cl of more than 95 %, consequently obtaining very high reductions of Na, Mg, Ba. A reduction of 17 % by weight of the initial content of dust is obtained in general.

Due to the corrosive nature of the liquids of this method, the agitation systems of the tanks and the line pipes have an anticorrosive coating. The liquid and pulp impulsion systems are carried out by means of peristaltic pumps.

Accordingly, the filtered solids have, on average, 10 % humidity, are insoluble solids, and are almost entirely made up of complex metal oxides.

### 3. EXTENSIVE SULPHATION:

The solid from the scrubbing phase enters the extensive sulphation phase. This consists of changing the chemical nature of the oxides to that of simple and complex sulphates in total form. In other words, going from a complex insoluble oxide integrity to a sulphate integrity. This step does not exist in any method present in the state of the art used for recovering metals from electric arc furnace dust; it consists of adding sulphuric acid to the solids of the scrubbing phase for the purpose of changing the chemical nature of the electric arc furnace dust from complex oxide compounds to a group of simple and complex reaction sulphates.

To generate this reaction, the mixture, by weight, of one part dust to 0.87 parts pure acid is performed in a reactor specially designed for this phase. The reactor is a continuous mixing reactor and a paste is generated in same; the reaction is exothermic and carried out in a range of 120°C to 150°C, to which there is added water at 80°C from the condensed water generation system, only in order to replace the water losses due to evaporation in the reaction and maintain the plastic condition of the paste.

This phase lasts for 20 minutes, and the paste generated is very dark, homogeneous and hot; it is important that it is mixed vigorously and constantly, because the paste formed is very viscous, and the complete chemical sulphation reaction and depletion of sulphuric acid must be obtained. This is a very important aspect since the method consumes all the acid, generating no free acid solutions in the method.

This phase does not produce liquids in any form and produces water vapour in a very limited form and very little acid mist, where these vapours and gases go to SO₃ recovery systems and re-enter the sulphuric acid stock system of the closed circuit method.

Essentially, in this step, the oxide molecules are broken down, replacing the oxygen in the molecules with the typical compound SO₄, which is an important aspect of the method and radically different from all existing methods, because the treatment of complex oxides is inefficient in the leaching methods with chemical reagents.

In this step, the chemical nature of the electric arc furnace dust changes completely, going from a complex oxide compound to a group of sulphates from a simple and complete reaction as the method continues until the reaction ends (complete consumption of the reagent). This is a turning point in the state of the art, because hereinafter, the nature of the entire method is different from all that exists because the material in the method has another chemical nature, that is, it is a sulphated mixture of electric arc furnace dust.

### 4. DRYING:

The sulphated mixture of electric arc furnace dust is dried in the same sulphation reactor, which continues to operate under continuous mixing, with the temperature of the reactor increasing to 200^{O}C, and the paste proceeds to dry, losing all the water by evaporation, forming dark grey agglomerated crystals.

This step lasts for about 10 minutes and has two important objectives: first, to remove water in order to prevent thermal shock in the next step, and second, to ensure the complete reaction of the new sulfide complex.

The reactor is still encapsulated. It is theoretically possible for a minimum amount of SO₃ to be present, the reactor being in line with of SO₃ capture and gas cleaning systems.

### 5. THERMOLYSIS:

The purpose of this step is to keep a part of the complex soluble (essentially zinc as zinc sulphate), and one part is converted to an insoluble part (essentially iron as hematite).

After the drying phase, the temperature of the reactor is increased to a working of 680 °C to 720 °C, depending on the concentration of Zn, Fe, Pb, in the paste. The mechanical mixing is kept constant such that the crystals formed in the drying phase can increase the temperature homogeneously. The reaction time is about 2 hours.

In this phase, the thermolysis reaction (thermal decomposition) of iron sulphate takes place as the main reaction, which produces the formation of hematite (Fe₂O₃), with the corresponding generation of SO2 and O2, according to the reaction:

4FeSO₄ = 2Fe₂O₃ + O₂ + 4SO₂.

The reaction is carried out at normal pressure. The generated gases are sent to the gas cleaning and SO₂ capture system, which is added to the sulphuric acid stock of the method. In addition to the thermal decomposition reaction of the iron, where the oxides with lower formation energy in relation to iron are also decomposed, as in the case of Pb, Ag, Si, Mn, P, Sn, Cd, Ni, Bi, etc.

The group of compounds present in majority form that do not decompose are of a higher energy of hematite formation, such as Zn, Ca and other minority compounds that maintain their new sulphate nature.

What has been achieved at this stage is of major importance in the method, that is, the hematite formed and all the additional oxides formed are insoluble, while, in contrast, zinc in the form of sulphate has a high solubility, which is sent to an encapsulated hopper where it is cooled to 70^{O}C.

### 6. AQUEOUS LEACHING:

The purpose of this step is to obtain two new complexes, one being liquid with a large amount of zinc and the other one being insoluble and essentially made up of hematite, gypsum and lead oxides plus other minor oxides.

The leaching time is about 1 hour to 1 hour and 30 minutes, is carried out in encapsulated tanks with an evaporation water vapour extraction system, and leaching is carried out at 260 RPM and 70 °C. The tanks have an anticorrosive coating, and the solutions are moved with peristaltic pumps.

The solid/liquid volumetric ratio is 1 to 3.6, where the water comes from the condensed water system and is a countercurrent system, such that the solids are solubilised and progressively lose zinc, whereas the solution progressively increases in terms of the content of zinc and, to a lesser extent, in terms of the content of Mn and Ca.

The leachate is condensed water, without the addition of any type of reactive chemical, where the objective of this phase is not to leave soluble elements in the solid essentially made up of hematite, and for this reason leaching is performed with the addition of water in order to replace water losses due to evaporation.

The aqueous leaching phase is very efficient and produces the very efficient extraction of zinc, producing a solution which, on average, tests 56 g of Zn per litre, with a small amount of other components, where the solids are, for the most part, hematite and other metal oxides such as calcium and lead oxides.

The solids are very fine, and a high-pressure pump filtration system is necessary for an efficient separation of the leached solution.

At this point, there are two new complexes, one being liquid with a large amount of zinc and the other one essentially made up of hematite, gypsum and lead oxides plus other minor oxides.

The solids are sent to the flotation method, and the liquids are sent to the evaporation - crystallisation / electrodeposition system, where it is essential to keep the temperature of the liquid flow at 70 °C, which is moved by peristaltic impulse.

### 7. ZINC RECOVERY:

The purpose of this step is to obtain zinc, in the desired form, as the final product, preferably as zinc sulphate or as zinc cathodes. If necessary, it is possible to purify the solution with the addition of zinc dust, and the obtained sludge is sent to the sludge system.

In a first desired form, shown in Figure 1, zinc sulphate is produced, and the liquid containing essentially zinc is previously vacuum-evaporated, this operation being performed in a conventional vacuum evaporator wherein the volume of water is reduced by 96 %, sending the water vapour to the condensation system, from where the water is recycled to the various water needs of the method.

The evaporation method prevents the metal and non-metal ions from leaving the solution, and the water vapours do not contain ions. As the volume of liquid water is reduced, the concentration of zinc increases.

For producing zinc sulphate, which gives the highest added value, an oversaturated solution of 1,800 g Zn/L is produced, which solution enters the crystallisation method in steps and in countercurrent in the conventional encapsulated reactor with a temperature delta of 40^{O}C. Crystallisation in steps is one of the most efficient forms of purification available. The first crystals are very pure, and the last crystals that are formed are less pure. This finally produces the crystalliser in a mixture of all these crystals, yielding a typical composition shown in Table 4. Zinc sulphate is widely used in the mining industry as a flotation reagent for polymetallic ores.

In a second desired form, to obtain zinc cathodes shown in Figure 2, a subsaturated solution is produced with 60 grams per litre of zinc for the zinc electrodeposition method, where high quality zinc cathodes with the consistency of agglomerated fine dust are obtained by means of the conventional method widely known in the metallurgical industry (zinc cathode electrodeposition method from sulphuric solutions). In this case, the liquids are recycled by vacuum evaporation, and the anode sludge is added to the concentrate of lead-silver. This product returns the metal to the industrial circuit.

### 8. FLOTATION:

This purpose of this method is to separate the hematite from lead oxides and various metal oxides present in a very small amount, for example, cadmium, nickel, arsenic.

The solids coming from the leaching phase are insoluble under normal conditions, with a majority composition of hematite and with the minority presence of lead oxides, calcium sulphate (gypsum) and an important presence of silver;

By using the flotation properties of the lead and silver oxides in the presence of hematite (absence of sulfides), foam flotation operations produce excellent separation, producing an ore concentrate of commercial-quality lead-silver the typical composition of which is reported in Table 2. This oxide ore flotation method also concentrates many of the heavy metals. However, it additionally cleans the hematite of this content.

Due to the ultrafine nature of the particles of all the components, it is a virtually artisanal operation that takes about two hours, the time needed to favour the entrainment of lead oxides and heavy metal oxides. The flotation reagents used are those from the family of sodium sulfide (Na2S), in the presence of sodium carbonate and sodium silicate, with the use of xanthate and pine oil. Additionally, the hematite needs starch as a depressant. The composition of the typical concentrate obtained is shown in Table 2 below.

**Table 2. Typical product composition**

| ZnSO4.7H2O | | | Fe° | | | CaSO4.2H2O | | | CC Pb Ag | | |
|---|---|---|---|---|---|---|---|---|---|---|---|
| Zinc sulphate heptahydrate | | | Reduced iron | | | Calcium sulphate dihydrate | | | Concentrate of lead-silver | | |
| Zn | 22.61 | % | Fe | 93.417 | % | CaSO4 | 52.26 | % | Pb | 52.06 | % |
| S | 11.01 | % | C | 3.921 | % | SiO2 | 18.31 | % | Ag 81.33 Oz/MT | | |
| ZnSO4 | 55.47 | % | Si | 1,266 | % | Fe2O3 | 7.28 | % | Zn | 4.88 | % |
| Cl | 0.71 | % | Mn | 0.669 | % | ZnO | 2.21 | % | Cu | 0.59 | % |
| Fe | 71 | ppm | P | 0.049 | % | PbO | 1.05 | % | S | 3.52 | % |
| Hg | Tr | ppm | S | 0.056 | % | H Me | 0.17 | % | insoluble | 5.11 | % |
| Pb | Tr | ppm | | | | | | | SiO2 | 1.95 | % |
| H Me | 2 | ppm | | | | | | | Ca | 0.68 | % |
| | | | | | | | | | Mn | 0.51 | % |
| | | | | | | | | | Bi | 0.12 | % |
| | | | | | | | | | Sb | 0.26 | % |
| | | | | | | | | | As | 0.08 | % |
| | | | | | | | | | Mg | 0.17 | % |
| | | | | | | | | | Al | 0.41 | % |
| | | | | | | | | | P | 0.19 | % |
| | | | | | | | | | Cd | 117 | ppm |
| | | | | | | | | | Ba | 437 | ppm |
| | | | | | | | | | Sn | 370 | ppm |

### 9. MAGNETIC SEPARATION:

The purpose of this step is to separate gypsum from the hematite.

The hematite still contains gypsum (CaSO4.2H2O); due to the need to use reduced hematite (FeO) as electric arc furnace feed material, it is necessary to remove the gypsum, for which magnetic separation is used, taking advantage of the wide delta of magnetic susceptibility existing between hematite (35x10³ SI) and gypsum (-0.11x10³ SI).

However, magnetic separation is also a unit operation which requires a great deal of supervision so as to prevent the entrainment of gypsum fines in the hematite, and it is done at low speeds between 0.7 feet/ min and 0.8 feet/min of the magnetic separator and at a magnetic flux density between 19,000 gauss and 21,000 gauss;
This operation uses magnetic separation steps from lower to higher flux density, obtaining pre-concentrates of hematite which are subsequently mixed in order to be sent to the hematite reduction method in their conventional form to produce reduced iron, which is agglomerated due to its fine nature to finally be returned to the electric arc furnace (EAF).

### 10. SO₃/SO₂ RECOVERY SYSTEM:

The method has a conventional catalytic system for SO₃/SO₂ recovery, capturing gases in diluted solutions of H2SO4 (at 70 %) in the presence of catalysts, the capture solution is added to the sulphuric acid stock of the method. The commercial system has forced air heat sinks and is encapsulated.

### 11. GAS SCRUBBING SYSTEM:

The gases of the system are essentially air, O₂ and CO₂; however, given the ultrafine nature of the dust, a small portion of said dust is entrained by the streams of said gases, which is why it is necessary to have a gas scrubbing system that retains the particles.

The environmental efficiency of the method with respect to the gaseous phase depends on the efficiency of this system, whereby it is a countercurrent cleaning system forcing the gas and particles to pass through water mist and sprays under countercurrent (1.2 m³ per m³ of gas), repeatedly, with several scrubbing columns and coils, The gas passes through ultrafine filters before leaving the method so as to ensure that there is no loss of solids.

The solids are captured as sludge which is, in essence, electric arc furnace dust or calcine from the thermolysis method; this sludge is sent to the sludge collection system, and the liquid from the gas scrubbing method is sent to the liquid purification unit by impulsion by peristaltic pumps.

### 12. SLUDGE RECOVERY (COLLECTOR):

This step prevents the loss of dust because of its ultrafine nature and consists of handling sludge formed by these particles. All the reactors and flow systems are encapsulated and capture fugitive particles which, because the various systems are in closed circuit, produce sludge. The latter is sent to this step of the method.

The water vapour also entrains a minimum portion of particles, which are captured in the vacuum evaporation system and sent to the sludge collector.

This sludge is filtered by two twin pumps, the first with a 5-micron membrane and the second with a 2.5-micron membrane; said membranes are made of phenolic resin. This operation is carried out at 3.5 bar of pressure.

The obtained solids are added to the concentrate of lead-silver, thereby preventing the significant generation of waste. This operation does not affect the quality of the concentrate.

The resulting liquid has an ionic content and is therefore sent to the liquid purification system.

### 13. LIQUID PURIFICATION - DETOX:

This step consists of a unit which receives liquid flows containing anions, cations, suspension of ultrafine solid particles from the dust scrubbing method, gas scrubbing method, sludge collector and liquid flows of the flotation phase (concentrate and tailings) and eventually from the cleaning and maintenance method for any reactor.

It consists of the water decontamination method, and consists of a chemical ion separation system, high-pressure membrane filtration, vacuum evaporation, chemical precipitation, returning the clean water to the industrial condensed water method, crystallising the contaminants. It is equipped with technology available on the market.

The solids are integrated (precipitates, sludge and crystals), homogenised and added to the concentrate of lead - silver for the respective marketing thereof.

### OTHER ASPECTS OF THE METHOD:

A particular feature of the present method is that it is designed for the steelmaking operator, as the new method can be installed in the same steelmaking plant, very close to the electric arc furnace, and can even share synergies with the steel plant as it is encapsulated and not susceptible to experiencing disruptions due to the atmosphere of the operations, and the operations of the method do not disrupt the operations of the steel plant.

Due to the way the chemical nature of the complex oxides (electric arc furnace dust) changes to a sulfide complex, the hazards associated with the generation of fugitive cadmium and hexavalent chromium salts are eliminated, and the hydrometallurgical problem of low zinc and iron recovery is solved. Consequently, hydrometallurgy is made easier and more environmentally friendly, as condensed water is used as a leachate, the condensed water being continuously regenerated by vacuum evaporation systems without generating effluents. The method consumes a minimum of water (only the zinc sulphate hydration water, the calcium sulphate hydration water, the humidity of the concentrate of lead-silver and evaporation are lost) which is added as a replacement.

No metals in the form of gas or molten solutions or elements are handled, and the method uses in its reactions solids, liquids and ions that are selectively separated. The method defines the manner of extracting hazardous metals (Pb, Cd, As, Co, etc.), and converting them to a final metallurgical product (concentrate of Pb-Ag), where this aspect is an important contribution as it sends heavy metals back to the lead treatment smelters, which are the most suitable circuits and methods for treating and recovering heavy or toxic metals.

The sludge generated in the various steps (gas cleaning, return water filtration sludge, air cleaning dust) are mixed with the concentrate of lead, adding them to this product. The method does not generate solid waste. Moreover, if necessary, this concentrate can be mixed with concentrates of higher grade lead in order to fulfil the commercial grades required by the industry.

The method emits only CO₂, as a result of the need to produce heat for the thermolysis reactor, due to the use of NGV/LPG to heat the reactor; the combustion gases are also used for the purification systems and maintenance of the reaction temperatures of the various solutions of the method and the evaporation systems at temperatures above normal conditions and negative pressure. It should be mentioned that electric systems such as motors, valves, actuators, sensors, lighting and contingency systems operate based on electrical energy (440V, 60Hz) supplied by the public system; it furthermore has a generator set which, in the case of contingency, provides energy for the emergency system (safe shutdown of operations) and lighting.

One aspect of special attention is that all reactors and solution delivery systems are coated with resin and polymer films with high corrosion resistance and working temperature ranges of 100^{O}C on average.

Gas delivery systems are developed with conventional systems for corrosive hot gas flows in the metallurgical industry (sulphide smelters and steelworks).

The method, on average, is as shown in Table 3, has the following mass behaviour with respect to the products which are obtained from 1 MT of electric arc furnace dust.

**Table 3. Unit mass table**

| **Furnace dust** | **A** | **ZnSO4.7H2O** | **Fe** | **CaSO4.2H2O** | **CC Pb** - **Ag** |
|---|---|---|---|---|---|
| **1000** | Kg | 838.01 | 182.84 | 209.19 | 26.79 |
| **40** | MT | 33.52 | 7.31 | 8.37 | 1.07 |

The positive weight differences are due to the addition of sulphur and the hydration water; 7H₂O in the case of zinc sulphate and 2H₂O in the case of calcium sulphate.

With respect to the metallurgical recoveries of the valuable elements of the method, which are essentially zinc, iron, lead / silver, these can be seen in Table 4.

**Table 4. Metallurgical recovery of economic metals**

| **Metal** | **ZnSO4.7H2O** | **Fe°** | **CC Pb - Ag** | **CaSO4.2H2O** | **Total** |
|---|---|---|---|---|---|
| **% Zinc** | 97.17 | | 0.67 | 1.90 | 99.74 |
| **% Iron** | | 93.34 | 5.83 | 0.79 | 99.95 |
| **% Lead** | | | 87.15 | 12.74 | 99.90 |
| **% Silver** | | | 66.43 | 33.50 | 99.93 |

The payable zinc content is, on average, 97 %, being contained in zinc sulphate, as the content present in the concentrate of lead-silver and in gypsum are not payable.

The concentrate of lead and silver is, in general, a concentrate considered dirty or borderline, because it receives sludge from the various purification or cleaning methods. The payable section is 87 % for lead and 66 % for silver, with respect to the content at the head, analysed in Table 1 and the quality reported in Table 2.

With respect to the reduced iron as the final step of the reduction of high-purity hematite, the method recovers 93 % of the total, and this product returns to the electric arc furnace. The difference of the iron is, firstly, in the gypsum due essentially to the fineness of the particles which have a strip entrainment effect, and, secondly, in the concentrate of lead-silver.

The gypsum formed in the method has good holding properties for the mining industry, which is the final destination of the product because it contains a portion of metals and the balance of silver.

### BRIEF DESCRIPTION OF THE FIGURES

Figure 1 is a block flow diagram illustrating a detailed embodiment of the invented method, because evaporation offers the flexibility of producing an oversaturated solution of zinc, from which zinc sulphate is produced in crystallisation.

Figure 2 is a flow diagram which shows a second additional embodiment of the invented method, as evaporation offers the flexibility of obtaining a subsaturated sulfuric solution in the order of 60 grams per litre, which allows for the use of the normal electrodeposition (EW) method from which zinc cathodes are obtained.

### EXEMPLARY EMBODIMENTS OF THE INVENTION

Steelmaking companies using electric arc furnaces for producing steels generally have a production which is, on average, a million tons of steel (1,000,000 MT) per year.

As previously mentioned, per ton of steel produced, 11 kg to 17 kg of electric arc furnace dust are generated, with a content of zinc from 12 % to 35 %.

Hence, on average, per million MT of steel produced annually, about 12,000 annual tons of electric arc furnace dust are produced.

In view of the attached figures, and according to the numbering of the steps of the method used, two non-limiting exemplary embodiments of the present invention can be seen therein, with the understanding that the description must be considered as an example of the principles of the invention and does not intend to limit the broad scope of protection of the hydrometallurgical method for simultaneously extracting metals and gypsum from the dust of a steelworks electric arc furnace.

Next, a detail for a typical operation of 40 DMT of electric arc furnace dust based on the described methods and Figures 1 and 2 will be described, where the operating detail is the following:
1. The dust is conditioned without adding any type of substance or liquid, and grades are determined for: Zn, Fe, Pb, Ag, Ca and Cl as follows:

| | | |
|---|---|---|
| Zn | 19.50 % | Average content of the blend of fresh and landfill dust. |
| Iron | 18.30 % | Average content of the blend of fresh and landfill dust. |
| Lead | 1.60 % | Average content of the blend of fresh and landfill dust. |
| Silver | 3.28 Oz /MT | Average content of the blend of fresh and landfill dust. |
| Calcium | 2.62 % | Average content of the blend of fresh and landfill dust. |
| Other metals (ppm) | 0.80 % | Sum of the content in ppm Cr, Sn, P, Ba, Cd, Sb, Sr, Ni, etc. |
| Chlorine | 4.50 % | Average content of the blend of fresh and landfill dust. |

2. 40 MT of a blend of dust are scrubbed in a reactor with 30.23 m³ of condensed water from the evaporation method at 80°C, which method is carried out at 0.97 atmospheres. 11.70 % of the weight of the dust is removed by removing Cl, Na, K, Mg, Ca, Ba, etc., and the solution is sent to DETOX to recover the salts.
3. The solid part from the scrubbing step enters the extensive sulphation phase, and 35.32 MT of a blend of dust are treated, raising the grade thereof 23.45 % due to the weight reduction. 22.96 MT of H₂SO₄ are added until the reaction ends and the reagent is completely consumed (complete stoichiometry), producing an exothermic reaction at 130 °C, and 11.48 m³ of condensed water from the evaporation method is added at 80 °C to replace the water that evaporates and to prevent thermal shock.
4. In the same reactor, the temperature is increased to 200 °C, producing the drying of 47.95 MT of dust paste, a weight that is increased due to the addition of S (SO₄), changing the chemical nature of the dust.
5. After the drying phase or step, 48.55 MT of dust is obtained due to the change in nature of iron from Fe₂O₃ to FeSO4, and it is subjected to thermolysis, with the temperature of the reactor increasing to 700 °C, depending on the concentration of Zn, Fe, Pb, in the paste. The mechanical mixing is kept constant such that the crystals formed in the drying phase can increase the temperature homogeneously, the reaction time being from 1.8 hours to 2.10 hours.
6. The solids (dust) obtained from the thermolysis step are subjected to aqueous leaching in encapsulated tanks with 131 m³ of condensed water coming from the evaporation method at 80 °C, in a solid/liquid volumetric ratio of 1 to 3.6, without adding any type of reactive chemical, producing an efficient extraction of zinc, obtaining a solution containing on average 56 g of zinc per litre and an amount of solids, mostly hematite and calcium and lead metal oxides. At this point, there are two new complexes, one being liquid with a large amount of Zn and the other one made up of hematite, gypsum, and essentially lead oxides. The solids are very fine, so they are filtered by means of high-pressure pumps, obtaining 28.65 **MT** of solid cake, which are sent to the flotation method, and the liquids are sent to the method for recovering zinc (evaporation - crystallisation/electrodeposition). The leaching is performed for a time of 1 hour to 1 hour and 30 minutes, and the flow temperature must be kept at 70 °C, said flow being moved by peristaltic impulse at 260 RPM.
7. From the liquid zinc complex obtained in the leaching step, depending on the form of zinc to be obtained as a final product, said zinc is recovered in two forms: a first form as zinc sulphate and a second form as zinc cathodes. **In** the first desired form, shown in Figure 1, the liquid containing essentially zinc is previously vacuum-evaporated, this operation being performed in a conventional vacuum evaporator, wherein the volume of water is reduced by 96 %, in the present case 126.89 m³ of water being evaporated, sending the water vapour to the condensation system, from where the water is recycled to the various water needs of the method.
The evaporation method prevents the metal and non-metal ions from leaving the solution, and the water vapours do not contain ions. As the volume of liquid water is reduced, the concentration of zinc increases.
To obtain zinc sulphate, which gives the highest added value, 4.11 m³ of oversaturated solution of Zn containing 1,800 g Zn/L is produced, which solution enters the crystallisation method in steps and in countercurrent in a conventional encapsulated reactor with a temperature delta of 40°C, obtaining 33.52 **MT** of ZnSO₄.7H₂O with an average % of commercial grade Zn of 22.62 %, producing an increase in weight due to the hydration water. The first crystals are very pure, and the last crystals are less pure. This finally produces the crystalliser in a mixture of all these crystals, yielding a typical composition shown in Table 4.
In a second desired form for Zn recovery in the form of cathodes, shown in Figure 2, a subsaturated solution is produced containing 60 grams per litre of zinc for the zinc electrodeposition method, by means of the conventional method widely known in the metallurgical industry (zinc cathode electrodeposition method from sulphuric solutions), obtaining 7.55 MT of zinc cathodes with a purity of 98 %. In this case, the liquids are recycled by vacuum evaporation, and the anode sludge is added to the concentrate of lead-silver.
8. The 28.65 MT of cake (dust solids) from the leaching step, which are insoluble under normal conditions, are subjected to a flotation method for a period of two hours for the purpose of separating the hematite that is present mostly from lead oxides, calcium sulphate (gypsum) and silver.
Due to the ultrafine nature of the particles of all the components, the flotation reagents used are those from the family of sodium sulfide (Na₂S), in the presence of sodium carbonate and sodium silicate, with the use of xanthate and pine oil. Additionally, the hematite needs starch as a depressant, which produce an excellent separation of an ore concentrate of commercial-quality lead-silver the typical composition of which is reported in Table 2. In the present example, 1.07 MT of concentrate of lead-silver is obtained, with a content of additional heavy metals, and 27.58 MT of tailings containing Fe₂O₃, CaSO₄, SiO2 and other minority components.
9. The 27.58 MT of tailings from the flotation step enter three in-line magnetic separators with a magnetic flux density between 19,000 gauss and 21,000 gauss, for the purpose of separating the gypsum from the hematite. This operation is performed at low speeds between 0.7 feet/min and 0.8 feet/min to prevent the entrainment of gypsum fines, and from a lower to higher flux density. This step obtains 20.92 MT of concentrate of hematite and 8.37 MT of gypsum (CaSO₄.2H₂O), producing an increase in weight due to the hydration water (2H₂O).
10. The gases which are produced in the different steps of the method are recovered in order to prevent them from being released into the environment through an encapsulated conventional catalytic system with forced air heat sinks for SO₃/SO₂ recovery, capturing the gases and acid mist solutions in diluted solutions of H₂SO₄ (al 70 %) in the presence of catalysts, and the capture solution is added to the sulphuric acid stock of the method. In an exemplary embodiment, 8.40 MT of SO₂ are recovered and recycled.
11. The gases and streams of air generated in the various areas of the method are sent to a liquid purification system for the purpose of making the method efficient and recovering a small portion of dust which is entrained by said gases. The cleaning system used is a countercurrent system, forcing the gas and particles to pass through water mist and sprays under countercurrent (1.2 m³ per m³ of gas), repeatedly, with several scrubbing columns and coils, The gas passes through ultrafine filters before leaving the method so as to ensure that there is no loss of solids. In the present exemplary embodiment, 2 MT of method gases (O₂ plus particles) are cleaned by means of commercial reactors, and the solids are captured as sludge which is, in essence, electric arc furnace dust or calcine from the thermolysis method, this sludge being sent to the sludge collection system, and the liquid from the gas scrubbing method is sent to the liquid purification unit (DETOX) by impulsion by peristaltic pumps.
12. The sludge generated in the various areas of the method is recovered in a sludge collector for the purpose of preventing the loss of dust due to its ultrafine nature. In the present exemplary embodiment, 120 Kg of sludge from the entire method are filtered at 3.5 bar in two twin pumps, the first with a 5-micron membrane and the second with 2.5-micron membrane. The solids obtained are added to the concentrate of lead/silver, and the resulting liquid having an ionic contained is sent to the solution purification system.
13. The liquid flows containing anions, cations, suspension of ultrafine solid particles from the dust scrubbing method, gas scrubbing method, sludge collector and the liquid flows from the flotation phase (concentrate and tailings) and eventually from the cleaning and maintenance method for any reactor are sent to a liquid purification unit for the purpose of being subjected to a water decontamination method which uses technology available on the market, consisting of a chemical ion separation system, high-pressure membrane filtration, vacuum evaporation, returning the clean water to the industrial condensed water method, crystallising the contaminants, and the solids are integrated (precipitates, sludge and crystals), homogenised and added in a suitable manner to the concentrate of lead-silver for the respective marketing thereof.

In the exemplary embodiment, 200 m3/day of liquids are purified.

Table 5 shows the specification and balance of products of the method for a typical application of 40 TMD of electric arc dust.

**Table 5. General balance of the method**

| 40 MT dust produce: | | | | | | | | | | | |
|---|---|---|---|---|---|---|---|---|---|---|---|
| ZnSO4.7H2O | | | Fe° | | | CaSO4.2H2O | | | CC Pb Ag | | |
| Zinc sulphate heptahydrate | | | Reduced iron | | | Calcium sulphate dihydrate | | | Concentrate of lead-silver | | |
| MT | | | MT | | | MT | | | MT | | |
| 33.52 | | | 7.31 | | | 8.37 | | | 1.07 | | |
| Zn | 22.61 | % | Fe | 93.417 | % | CaSO4 | 52.26 | % | Pb | 52.06 | % |
| S | 11.01 | % | C | 3.921 | % | SiO2 | 18.31 | % | Ag | 81.33 | Oz/MT |
| ZnSO4 | 55.47 | % | Si | 1.266 | % | Fe2O3 | 7.28 | % | Zn | 4.88 | % |
| Cl | 0.71 | % | Mn | 0.669 | % | ZnO | 2.21 | % | Cu | 0.59 | % |
| Fe | 71 | ppm | P | 0.049 | % | PbO | 1.05 | % | S | 3.52 | % |
| Hg | Tr | ppm | S | 0.056 | % | H Me | 0.17 | % | insoluble | 5.11 | % |
| Pb | Tr | ppm | | | | | | | SiO2 | 1.95 | % |
| H Me | 2 | ppm | | | | | | | Ca | 0.68 | % |
| | | | | | | | | | Mn | 0.51 | % |
| | | | | | | | | | Bi | 0.12 | % |
| | | | | | | | | | Sb | 0.26 | % |
| | | | | | | | | | As | 0.08 | % |
| | | | | | | | | | Mg | 0.17 | % |
| | | | | | | | | | Al | 0.41 | % |
| | | | | | | | | | P | 0.19 | % |
| | | | | | | | | | Cd | 117 | ppm |
| | | | | | | | | | Ba | 437 | ppm |
| | | | | | | | | | Sn | 370 | ppm |

## Claims

1. A hydrometallurgical method for extracting metals and gypsum from any type of dust of a steelworks electric arc furnace, **CHARACTERISED in that** it recovers, by simultaneously extracting, zinc, lead, silver, iron and calcium, in the form of industrial products; zinc as zinc sulphate or zinc cathodes; lead and silver as a concentrate of lead and silver; iron as reduced elemental iron for return to the electric arc furnace; and, lastly, calcium as gypsum, comprising the following steps:
1) conditioning the electric arc dust, where it consists of homogenising and identifying its chemical composition in terms of the content of Zn, He, Cl, Pb, Ca, Ag, Cd and Hg, in order to know the grade of valuable metals present and of the elements of risk for metallurgical control and balance in the method, this action being performed in an encapsulated mixture which produces the homogeneous mixture, constituting the homogeneous electric arc dust stock which is stored in encapsulated hoppers, which will enter the method after the respective chemical analysis has been performed;
2) scrubbing the dust from step 1) with water, where it contains halogens and, consequently, alkalis and alkalines, elements which must be removed from the oxide complex because they are detrimental to the following steps of the method, for which the homogenised dust is transported from the encapsulated hoppers to the scrubbing tanks, the water comes from the condensed water feed system having an absence of dissolved gases and salts and enters at the temperature of 80 °C with a mass ratio of 3 to 1; the scrubbing tanks maintain a constant suspension by means of mechanical agitation for 15 minutes in the first part of the scrubbing, producing a liquid loaded with soluble complexes of Cl, Na, K, Mg, Ca, Ba, which is sent to the liquid purification unit of the method by means of the liquid/pulp decanting system; the pulp enters a second scrubbing time of 10 minutes, with water of the same characteristics of the method so as to force a second dissolution of halogens, alkalis, alkalines, and, similarly, the decanting system sends the liquid to the liquid purification system, and the previously filtered solids pass to the following step;
3) extensive sulphation, where it consists of adding sulphuric acid to the solids of the scrubbing phase for the purpose of changing the chemical nature of the electric arc furnace dust from complex oxide compounds to a group of simple and complex reaction sulphates; to generate this reaction, one part dust to 0.87 parts pure acid is mixed by weight in a continuous mixing reactor specially designed for this phase, generating a paste, the reaction is exothermic and carried out in a range of 120°C to 150°C, to which there is added water at 80°C from the condensed water generation system, in order to replace the water losses due to evaporation in the reaction and maintain the plastic condition of the paste;
4) drying, where it consists of drying the sulphated mixture of electric arc furnace dust in the same sulphation reactor, which continues to operate under continuous mixing, with the temperature of the reactor increasing to 200°C, the paste proceeds to dry, losing all the water by evaporation, forming dark grey agglomerated crystals;
5) thermolysis or thermal decomposition, where, in this step, one part of the complex is converted to a soluble part (essentially zinc) and one part is converted to an insoluble part (essentially iron), and after the drying phase, it consists of the temperature of the reactor increasing to a working range of 680°C to 720°C, depending on the concentration of Zn, Fe, Pb, in the paste, and the mechanical mixing is kept constant such that the crystals formed in the drying phase can increase the temperature homogeneously, the reaction time being 2 hours;
6) aqueous leaching, where two new complexes are obtained in this step, one being liquid comprising zinc and the other one being insoluble and essentially made up of hematite, gypsum and lead oxides plus other minor oxides, being carried out at 260 RPM and 70°C in encapsulated tanks with an evaporation water vapour extraction system and in a solid/liquid ratio of 1 to 3.6, the leaching time being between 1 hour and 1 hour and 30 minutes;
7) zinc recovery, where zinc is obtained in this step according to two preferred forms to be obtained, the first in the form of zinc sulphate by means of evaporation and crystallisation, and the second in the form of zinc cathodes by electrodeposition;
8) flotation, where in this step hematite is separated from lead oxides and various metal oxides in a very small amount, such as, for example, cadmium, nickel, arsenic oxides; the solid coming from the leaching phase is insoluble under normal conditions, comprising hematite and lead oxides, calcium sulphate (gypsum) and silver;
9) magnetic separation, where in this step the hematite still contains gypsum (CaSO4.2H₂O), where the gypsum must be separated from the hematite due to the need to use reduced hematite (Fe^{O}) as electric arc furnace feed material, it is necessary to remove the gypsum, for which magnetic separation is used, taking advantage of the wide delta of magnetic susceptibility existing between hematite (35x10³ SI) and gypsum (-0.11x10³ SI), at low speeds between 0.7 feet/ min and 0.8 feet/min of the magnetic separator and at a magnetic flux density between 19,000 gauss and 21,000 gauss;
10) a gas recovery step, which comprises the use of a conventional catalytic system for SO₃/SO₂ recovery, capturing gases in diluted solutions of H₂SO₄ (at 70 %) in the presence of catalysts, the capture solution is added to the sulphuric acid stock of the step, said conventional catalytic system having forced air heat sinks and being encapsulated;
11) a gas scrubbing step, wherein the system gases comprise air, O₂ and CO₂, and dust entrained therein, the step comprises passing the system gases through a gas scrubbing system that retains the particles, forcing the gas and particles to pass through water mist and sprays under countercurrent (1.2 m³ per m³ of gas), repeatedly, with several scrubbing columns and coils, with the gas passing through ultrafine filters before leaving the step, so as to ensure that there is no loss of solids;
12) recovery of sludge from the collector, where the loss of dust because of its ultrafine nature is prevented in this step, and it consists of handling sludge from these particles from all the reactors and flow systems which are encapsulated and capture fugitive particles which, because the various systems are in a closed circuit, finally produce sludge, as well as of water vapour which also entrains a minimum portion of particles, which are captured in the vacuum evaporation system and sent to the sludge collector; this sludge is filtered by two twin pumps with phenolic resin membranes at a pressure of 3.5 bar, the first with a 5-micron membrane and the second with a 2.5-micron membrane;
13) liquid purification, where this step consists **in that** a water decontamination unit receives liquid flows containing anions, cations, suspension of ultrafine solid particles from the dust scrubbing method, gas scrubbing method, sludge collector and liquid flows of the flotation phase (concentrate and tailings) and eventually from the cleaning and maintenance method for any reactor, and consists of a chemical ion separation system, high-pressure membrane filtration, vacuum evaporation, returning the clean water to the industrial condensed water method, crystallising the contaminants; the solids are integrated (precipitates, sludge and crystals), homogenised and added to the concentrate of lead/silver for the respective marketing thereof.

2. The hydrometallurgical method according to claim 1, **CHARACTERISED in that** in step 1) the content of zinc is determined and is from 12 % to 35 % and the content of iron is determined and is from 17.26 % to 28.26 %.

3. The hydrometallurgical method according to claim 1, **CHARACTERISED in that** in step 2) a reduction of Cl of more than 95 % is obtained, consequently, very high reductions of Na, Mg, Ba are obtained, generally obtaining an average reduction of the 17 % by weight of the initial content of dust (depending on the elemental contents in each specific case).

4. The hydrometallurgical method according to claim 1, **CHARACTERISED in that** step 3) produces no liquids in any form, and produced water vapour and acid mist go to SO₂/SO₃ recovery systems and re-enter the sulphuric acid stock system of the closed circuit method.

5. The hydrometallurgical method according to claim 4, **CHARACTERISED in that** in step 3), the oxide molecules are broken down, replacing the oxygen in the molecules with the typical compound SO₄.

6. The hydrometallurgical method according to claim 1, **CHARACTERISED in that** step 4) lasts for about 10 minutes and allows for the removal of water to prevent thermal shock in the next step and to ensure the complete reaction of the new sulfide complex.

7. The hydrometallurgical method according to claim 1, **CHARACTERISED in that** in step 5), the thermolysis reaction (thermal decomposition) of iron sulphate takes place as the main reaction, which produces the formation of hematite, with the corresponding generation of SO₂ and O₂, according to the reaction: 4FeSO₄ = 2Fe₂O₃ + O₂ + 4SO₂.

8. The hydrometallurgical method according to claim 7, **CHARACTERISED in that** the reaction is carried out at normal pressure, the generated gases are sent to the gas cleaning and SO₂ capture system, which is added to the sulphuric acid stock of the method, in addition to the thermal decomposition reaction of the iron, where the oxides with lower formation energy in relation to iron are also decomposed, as in the case of Pb, Ag, Si, Mn, P, Sn, Cd, Ni, Bi.

9. The hydrometallurgical method according to claim 7, **CHARACTERISED in that** in step 5) insoluble hematite and oxides and soluble zinc in the form of sulphate are formed, and the zinc sulphate is sent to an encapsulated hopper where it is cooled to 70^{O}C.

10. The hydrometallurgical method according to claim 1, **CHARACTERISED in that** in step 6), the leaching water comes from the condensed water system, which is a countercurrent system, such that the solids are solubilised and lose zinc, whereas the solution increases in terms of the content of zinc and in terms of the content of Mn and Ca.

11. The hydrometallurgical method according to claim 10, **CHARACTERISED in that** the water leachate does not contain any type of reactive chemical, which prevents them from being soluble in the solid comprising of hematite, and replaces the water losses due to evaporation.

12. The hydrometallurgical method according to claim 10 or 11, **CHARACTERISED in that** the aqueous leaching phase produces the very efficient extraction of zinc, producing a solution which, on average, tests 56 g of Zn per litre, with a small amount of other components, where the solids are, for the most part, hematite and other metal oxides such as calcium and lead oxides.

13. The hydrometallurgical method according to claim 12, **CHARACTERISED in that** the solids are very fine and a high-pressure pump filtration system is necessary for an efficient separation of the leached solution, generating two new complexes, one being liquid comprising zinc and the other one comprising hematite, gypsum and lead oxides plus other minor oxides, which are sent to the flotation method, and the liquids are sent to the zinc recovery system (evaporation - crystallisation/electrodeposition), where it is essential to keep the temperature of the liquid flow at 70 °C, which is moved by peristaltic impulse.

14. The hydrometallurgical method according to claim 1, **CHARACTERISED in that** in a first preferred embodiment, in step 7 (Zn recovery), zinc sulphate is produced, and the liquid comprising zinc is previously vacuum-evaporated, this operation being performed in a conventional vacuum evaporator wherein the volume of water is reduced by 96 %, sending the water vapour to the condensation system, from where the water is recycled to the various water needs of the method.

15. The hydrometallurgical method according to claim 1, **CHARACTERISED in that** in step 12), the obtained solids are added to the concentrate of lead/silver, thereby preventing the generation of waste, an operation that does not affect the quality of the concentrate, and the resulting liquid has an ionic content, and is therefore sent to the liquid purification unit.

## Patentansprüche

1. Hydrometallurgisches Verfahren zur Extraktion von Metallen und Gips aus jeder Art von Staub eines Elektrolichtbogenofens in einem Stahlwerk, **DADURCH GEKENNZEICHNET, dass** es durch gleichzeitige Extraktion Zink, Blei, Silber, Eisen und Calcium in Form von Industrieprodukten zurückgewinnt; Zink als Zinksulfat oder Zinkkathoden; Blei und Silber als Konzentrat aus Blei und Silber; Eisen als reduziertes elementares Eisen zur Rückführung in den Elektrolichtbogenofen; und schließlich Calcium als Gips, umfassend die folgenden Schritte:
1) Konditionieren des Lichtbogenstaubs, wobei dies aus dem Homogenisieren und dem Identifizieren seiner chemischen Zusammensetzung in Bezug auf den Gehalt an Zn, He, Cl, Pb, Ca, Ag, Cd und Hg besteht, um den Gehalt an vorhandenen wertvollen Metallen und an den Risikoelementen für die metallurgische Kontrolle und das Gleichgewicht im Verfahren zu kennen, wobei dieser Vorgang in einem gekapselten Gemisch durchgeführt wird, welches das homogene Gemisch erzeugt, das den homogenen Lichtbogenstaubvorrat bildet, der in gekapselten Trichtern gelagert wird, der nach der Durchführung der jeweiligen chemischen Analyse in das Verfahren eintritt;
2) Waschen des Staubs aus Schritt 1) mit Wasser, wobei er Halogene und folglich Alkalien und Alkalimetalle enthält, Elemente, die aus dem Oxidkomplex entfernt werden müssen, da sie für die folgenden Schritte des Verfahrens schädlich sind, wofür der homogenisierte Staub von den gekapselten Trichtern zu den Waschtanks transportiert wird, wobei das Wasser aus dem Kondensatzufuhrsystem stammt, das keine gelösten Gase und Salze enthält, und bei einer Temperatur von 80 °C mit einem Massenverhältnis von 3 zu 1 eintritt; die Waschtanks halten im ersten Teil des Waschvorgangs 15 Minuten lang durch mechanisches Rühren eine konstante Suspension aufrecht, wodurch eine mit löslichen Komplexen von Cl, Na, K, Mg, Ca, Ba beladene Flüssigkeit entsteht, die mittels des Flüssigkeits-/Trüben-Dekantiersystems zur Flüssigkeitsreinigungseinheit des Verfahrens geleitet wird; Die Trübe durchläuft eine zweite Waschphase von 10 Minuten mit Wasser mit den gleichen Eigenschaften wie im Verfahren, um eine zweite Auflösung von Halogenen, Alkalien und alkalischen Stoffen zu erzwingen, und in ähnlicher Weise leitet das Dekantiersystem die Flüssigkeit an das Flüssigkeitsreinigungssystem weiter, und die zuvor gefilterten Feststoffe gelangen in den folgenden Schritt;
3) umfassende Sulfatierung, wobei diese darin besteht, den Feststoffen der Waschphase Schwefelsäure zuzusetzen, um die chemische Beschaffenheit des Lichtbogenofenstaubs von komplexen Oxidverbindungen in eine Gruppe von einfachen und komplexen Reaktionssulfaten zu ändern; um diese Reaktion zu erzeugen, wird ein Teil Staub mit 0,87 Teilen reiner Säure nach Gewicht in einem speziell für diese Phase konzipierten kontinuierlichen Mischreaktor gemischt, wodurch eine Paste entsteht. Die Reaktion ist exotherm und wird in einem Bereich von 120 °C bis 150 °C durchgeführt, wobei Wasser mit 80 °C aus dem System zur Kondensaterzeugung hinzugefügt wird, um die Wasserverluste durch Verdunstung in der Reaktion zu ersetzen und den plastischen Zustand der Paste zu erhalten;
4) Trocknen, wobei dies darin besteht, das sulfatierte Gemisch aus Lichtbogenofenstaub in demselben Sulfatierungsreaktor zu trocknen, der weiterhin unter kontinuierlichem Mischen arbeitet, wobei die Temperatur des Reaktors auf 200 °C ansteigt, die Paste weiter trocknet, das gesamte Wasser durch Verdampfung verliert und dunkelgraue agglomerierte Kristalle bildet;
5) Thermolyse oder thermische Zersetzung, wobei in diesem Schritt ein Teil des Komplexes in einen löslichen Teil (im Wesentlichen Zink) und ein Teil in einen unlöslichen Teil (im Wesentlichen Eisen) umgewandelt wird, und nach der Trocknungsphase darin besteht, dass die Temperatur des Reaktors auf einen Arbeitsbereich von 680 °C bis 720 °C erhöht wird, abhängig von der Konzentration von Zn, Fe, Pb in der Paste, und das mechanische Mischen konstant gehalten wird, sodass die in der Trocknungsphase gebildeten Kristalle die Temperatur homogen erhöhen können, wobei die Reaktionszeit 2 Stunden beträgt;
6) wässrige Auslaugung, wobei in diesem Schritt zwei neue Komplexe erhalten werden, von denen einer flüssig ist und Zink enthält und der andere unlöslich ist und im Wesentlichen aus Hämatit, Gips und Bleioxiden sowie anderen Nebenoxiden besteht, wobei dies bei 260 U/min und 70 °C in gekapselten Tanks mit einem System zur Extraktion von Verdampfungswasserdampf und in einem Feststoff-Flüssigkeits-Verhältnis von 1 zu 3,6 durchgeführt wird, wobei die Auslaugungszeit zwischen 1 Stunde und 1 Stunde und 30 Minuten beträgt;
7) Zinkrückgewinnung, wobei in diesem Schritt Zink in zwei bevorzugten Formen erhalten wird, die erste in Form von Zinksulfat durch Verdampfung und Kristallisation und die zweite in Form von Zinkkathoden durch Elektroabscheidung;
8) Flotation, wobei in diesem Schritt Hämatit von Bleioxiden und verschiedenen Metalloxiden in sehr geringer Menge, wie zum Beispiel Cadmium-, Nickel-, Arsenoxiden, abgetrennt wird; der aus der Auslaugphase stammende Feststoff ist unter normalen Bedingungen unlöslich und umfasst Hämatit und Bleioxide, Calciumsulfat (Gips) und Silber;
9) Magnetabscheidung, wobei in diesem Schritt der Hämatit noch Gips (CaSO4.2H₂O) enthält, wobei der Gips vom Hämatit getrennt werden muss, da reduzierter Hämatit (Fe°) als Einsatzmaterial für den Elektrolichtbogenofen verwendet werden muss. Es ist notwendig, den Gips zu entfernen, wofür die Magnetabscheidung verwendet wird, wobei das breite Delta der magnetischen Suszeptibilität zwischen Hämatit (35 x 10³ SI) und Gips (-0,11 x 10³ SI) genutzt wird, bei niedrigen Geschwindigkeiten zwischen 0,7 Fuß/min und 0,8 Fuß/min des Magnetabscheiders und bei einer magnetischen Flussdichte zwischen 19.000 Gauß und 21.000 Gauß;
10) einen Gasrückgewinnungsschritt, der die Verwendung eines herkömmlichen katalytischen Systems zur SO₃/SO₂-Rückgewinnung umfasst, wobei Gase in verdünnten Lösungen von H₂SO₄ (zu 70 %) in Gegenwart von Katalysatoren aufgefangen werden, wobei die Auffanglösung dem Schwefelsäurevorrat des Schrittes zugesetzt wird, wobei das herkömmliche katalytische System Umluft-Kühlkörper aufweist und gekapselt ist;
11) einen Gaswaschschritt, bei dem die Systemgase Luft, O₂ und CO₂ sowie darin mitgeführten Staub umfassen, wobei der Schritt das Leiten der Systemgase durch ein Gaswaschsystem umfasst, das die Partikel zurückhält, wobei das Gas und die Partikel gezwungen werden, im Gegenstrom (1,2 m³ pro m³ Gas) wiederholt durch Wassernebel und - sprühnebel zu strömen, mit mehreren Waschkolonnen und Spulen, wobei das Gas vor dem Verlassen des Schritts durch Feinstfilter geleitet wird, um sicherzustellen, dass kein Feststoffverlust auftritt;
12) Rückgewinnung von Schlamm aus dem Sammelbehälter, wobei in diesem Schritt der Verlust von Staub aufgrund seiner ultrafeinen Beschaffenheit verhindert wird, und er besteht aus der Behandlung von Schlamm aus diesen Partikeln aus allen Reaktoren und Strömungssystemen, die gekapselt sind und flüchtige Partikel auffangen, die, da sich die verschiedenen Systeme in einem geschlossenen Kreislauf befinden, schließlich Schlamm erzeugen, sowie aus Wasserdampf, der ebenfalls einen minimalen Anteil an Partikeln mitreißt, die im Vakuumverdampfungssystem aufgefangen und in den Schlamm-Sammelbehälter geleitet werden; dieser Schlamm wird von zwei Doppelpumpen mit Phenolharzmembranen bei einem Druck von 3,5 bar gefiltert, die erste mit einer 5-Mikron-Membran und die zweite mit einer 2,5-Mikron-Membran;
13) Flüssigkeitsreinigung, wobei dieser Schritt darin besteht, dass eine Wasserdekontaminationseinheit Flüssigkeitsströme aufnimmt, die Anionen, Kationen, Suspensionen ultrafeiner fester Partikel aus dem Staubwaschverfahren, dem Gaswaschverfahren, dem Schlammkollektor und Flüssigkeitsströme aus der Flotationsphase (Konzentrat und Rückstände) und schließlich aus dem Reinigungs- und Wartungsverfahren für jeden Reaktor enthalten, und aus einem chemischen Ionentrennsystem, einer Hochdruck-Membranfiltration, einer Vakuumverdampfung, der Rückführung des sauberen Wassers in das industrielle Kondensatverfahren und der Kristallisation der Verunreinigungen besteht; die Feststoffe werden integriert (Niederschläge, Schlamm und Kristalle), homogenisiert und dem Blei-/Silberkonzentrat für die jeweilige Vermarktung zugesetzt.

2. Hydrometallurgisches Verfahren nach Anspruch 1, **DADURCH GEKENNZEICHNET, dass** in Schritt 1) der Gehalt an Zink bestimmt wird und 12 % bis 35 % beträgt und der Gehalt an Eisen bestimmt wird und 17,26 % bis 28,26 % beträgt.

3. Hydrometallurgisches Verfahren nach Anspruch 1, **DADURCH GEKENNZEICHNET, dass** in Schritt 2) eine Reduktion von Cl von mehr als 95 % erreicht wird, wodurch sehr hohe Reduktionen von Na, Mg, Ba erreicht werden, wobei im Allgemeinen eine durchschnittliche Reduktion von 17 Gew.-% des ursprünglichen Staubgehalts erreicht wird (abhängig von den Elementgehalten im jeweiligen Einzelfall).

4. Hydrometallurgisches Verfahren nach Anspruch 1, **DADURCH GEKENNZEICHNET, dass** in Schritt 3) keine Flüssigkeiten in irgendeiner Form erzeugt werden und der erzeugte Wasserdampf und Säurenebel zu SO₂/SO₃-Rückgewinnungssystemen geleitet werden und wieder in das Schwefelsäure-Vorratssystem des geschlossenen Kreislaufverfahrens gelangen.

5. Hydrometallurgisches Verfahren nach Anspruch 4, **DADURCH GEKENNZEICHNET, dass** in Schritt 3) die Oxidmoleküle aufgespalten werden, wobei der Sauerstoff in den Molekülen durch die typische Verbindung SO ₄ ersetzt wird.

6. Hydrometallurgisches Verfahren nach Anspruch 1, **DADURCH GEKENNZEICHNET, dass** Schritt 4) etwa 10 Minuten dauert und die Entfernung von Wasser ermöglicht, um einen Temperaturschock im nächsten Schritt zu verhindern und die vollständige Reaktion des neuen Sulfidkomplexes zu gewährleisten.

7. Hydrometallurgisches Verfahren nach Anspruch 1, **DADURCH GEKENNZEICHNET, dass** in Schritt 5) die Thermolysereaktion (thermische Zersetzung) von Eisensulfat als Hauptreaktion stattfindet, die die Bildung von Hämatit mit der entsprechenden Erzeugung von SO₂ und O₂ gemäß der folgenden Reaktion bewirkt: 4FeSO₄ = 2Fe₂O₃ + O₂ + 4SO₂.

8. Hydrometallurgisches Verfahren nach Anspruch 7, **DADURCH GEKENNZEICHNET, dass** die Reaktion bei Normaldruck durchgeführt wird, die erzeugten Gase in das Gasreinigungs- und SO2-Abscheidesystem geleitet werden, das dem Schwefelsäurevorrat des Verfahrens zugesetzt wird, zusätzlich zu der thermischen Zersetzungsreaktion des Eisens, bei der auch die Oxide mit niedrigerer Bildungsenergie im Verhältnis zu Eisen zersetzt werden, wie im Fall von Pb, Ag, Si, Mn, P, Sn, Cd, Ni, Bi.

9. Hydrometallurgisches Verfahren nach Anspruch 7, **DADURCH GEKENNZEICHNET, dass** in Schritt 5) unlösliches Hämatit und Oxide sowie lösliches Zink in Form von Sulfat gebildet werden und das Zinksulfat in einen gekapselten Trichter geleitet wird, wo es auf 70 °C abgekühlt wird.

10. Hydrometallurgisches Verfahren nach Anspruch 1, **DADURCH GEKENNZEICHNET, dass** in Schritt 6) das Auswaschwasser aus dem Kondensatsystem stammt, bei dem es sich um ein Gegenstromsystem handelt, so dass die Feststoffe gelöst werden und Zink verlieren, während die Lösung an Zinkgehalt und an Mn- und Ca-Gehalt zunimmt.

11. Hydrometallurgisches Verfahren nach Anspruch 10, **DADURCH GEKENNZEICHNET, dass** die Laugungslösung keine reaktive Chemikalie enthält, die verhindert, dass sie in dem aus Hämatit bestehenden Feststoff löslich sind, und die Wasserverluste durch Verdunstung ersetzt.

12. Hydrometallurgisches Verfahren nach Anspruch 10 oder 11, **DADURCH GEKENNZEICHNET, dass** die wässrige Auslaugungsphase die sehr effiziente Extraktion von Zink bewirkt, wobei eine Lösung entsteht, die im Durchschnitt 56 g Zn pro Liter enthält, mit einer geringen Menge anderer Komponenten, wobei die Feststoffe zum größten Teil Hämatit und andere Metalloxide wie Calcium- und Bleioxide sind.

13. Hydrometallurgisches Verfahren nach Anspruch 12, **DADURCH GEKENNZEICHNET, dass** die Feststoffe sehr fein sind und ein Hochdruck-Pumpen-Filtersystem für eine effiziente Trennung der ausgelaugten Lösung erforderlich ist, wobei zwei neue Komplexe erzeugt werden, von denen einer flüssig ist und Zink enthält und der andere Hämatit, Gips und Bleioxide sowie andere geringfügige Oxide enthält, die zum Flotationsverfahren geleitet werden, und die Flüssigkeiten zum Zinkrückgewinnungssystem (Verdampfung - Kristallisation/Elektroabscheidung) geleitet werden, wo es unerlässlich ist, die Temperatur des Flüssigkeitsstroms bei 70 °C zu halten, der durch peristaltische Impulse bewegt wird.

14. Hydrometallurgisches Verfahren nach Anspruch 1, **DADURCH GEKENNZEICHNET, dass** in einer ersten bevorzugten Ausführungsform in Schritt 7 (Zn-Rückgewinnung) Zinksulfat hergestellt wird und die Zink enthaltende Flüssigkeit zuvor einer Vakuumverdampfung unterzogen wird, wobei dieser Vorgang in einem herkömmlichen Vakuumverdampfer durchgeführt wird, in dem das Wasservolumen um 96 % reduziert wird und der Wasserdampf in das Kondensationssystem geleitet wird, von wo aus das Wasser für den unterschiedlichen Wasserbedarf des Verfahrens zurückgeführt wird.

15. Hydrometallurgisches Verfahren nach Anspruch 1, **DADURCH GEKENNZEICHNET, dass** in Schritt 12) die erhaltenen Feststoffe dem Blei-/Silberkonzentrat zugesetzt werden, wodurch die Erzeugung von Abfall verhindert wird, ein Vorgang, der die Qualität des Konzentrats nicht beeinträchtigt, und die resultierende Flüssigkeit einen ionischen Gehalt aufweist und daher in die Flüssigkeitsreinigungseinheit geleitet wird.

## Revendications

1. Procédé hydrométallurgique d'extraction de métaux et de gypse à partir d'un quelconque type de poussières d'un four à arc électrique d'aciérie, **CARACTÉRISÉ en ce qu'**il récupère, par extraction simultanée, du zinc, du plomb, de l'argent, du fer et du calcium, sous la forme de produits industriels ; le zinc en tant que sulfate de zinc ou de cathodes de zinc ; le plomb et l'argent en tant que concentré de plomb et d'argent ; le fer en tant que fer élémentaire réduit pour un retour dans le four à arc électrique ; et, enfin, le calcium en tant que gypse, comprenant les étapes suivantes :
1) conditionnement des poussières d'arc électrique, consistant en l'homogénéisation et l'identification de leur composition chimique en termes de teneur en Zn, He, Cl, Pb, Ca, Ag, Cd et Hg, afin de connaître la teneur en métaux de valeur présents et en éléments à risque pour le contrôle et l'équilibre métallurgiques dans le procédé, cette action étant réalisée dans un mélange encapsulé qui produit le mélange homogène, constituant le stock homogène de poussières d'arc électrique qui est stocké dans des trémies encapsulées, qui entrera dans le procédé après la réalisation de l'analyse chimique respective ;
2) lavage des poussières de l'étape 1) avec de l'eau, contenant des halogènes et, en conséquence, des éléments alcalins et alcalino-terreux, qui doivent être éliminés du complexe d'oxydes car ils sont préjudiciables vis-à-vis des étapes suivantes du procédé, pour lesquelles les poussières homogénéisées sont transportées des trémies encapsulées vers les cuves de lavage, l'eau provient du système d'alimentation en eau condensée ne contenant pas de gaz et de sels dissous et entre à la température de 80 °C avec un rapport massique de 3 à 1 ; les cuves de lavage maintiennent une suspension constante au moyen d'une agitation mécanique pendant 15 minutes dans la première partie du lavage, produisant un liquide chargé de complexes solubles de Cl, Na, K, Mg, Ca, Ba, qui est envoyé vers l'unité de purification de liquide du procédé au moyen du système de décantation liquide/pulpe ; la pulpe entre dans une seconde phase de lavage de 10 minutes, avec de l'eau ayant les mêmes caractéristiques que le procédé de sorte à forcer une seconde dissolution des halogènes, des éléments alcalins, alcalino-terreux, et, similaires, le système de décantation envoie le liquide vers le système de purification du liquide, et les solides préalablement filtrés passent à l'étape suivante ;
3) sulfatation poussée, consistant en l'ajout d'acide sulfurique aux solides de la phase de lavage dans le but de modifier la nature chimique des poussières du four à arc électrique de composés d'oxydes complexes en un groupe de sulfates de réaction simples et complexes ; pour générer cette réaction, une partie de poussières pour 0,87 partie d'acide pur est mélangée en poids dans un réacteur de mélange continu spécialement conçu pour cette phase, générant une pâte, la réaction est exothermique et réalisée dans une plage de 120 °C à 150 °C, à laquelle est ajoutée de l'eau à 80 °C provenant du système de génération d'eau condensée, afin de remplacer les pertes d'eau dues à l'évaporation dans la réaction et de maintenir l'état plastique de la pâte ;
4) séchage, consistant à sécher le mélange sulfaté de poussières du four à arc électrique dans le même réacteur de sulfatation, qui continue à fonctionner sous mélange continu, la température du réacteur augmentant jusqu'à 200 °C, la pâte commence à sécher, perdant toute l'eau par évaporation, formant des cristaux agglomérés gris foncé ;
5) thermolyse ou décomposition thermique, où, dans cette étape, une partie du complexe est convertie en une partie soluble (essentiellement du zinc) et une partie est convertie en une partie insoluble (essentiellement du fer), et après la phase de séchage, elle consiste en une augmentation de la température du réacteur jusqu'à une plage de travail de 680 °C à 720 °C, en fonction de la concentration de Zn, Fe, Pb, dans la pâte, et le mélange mécanique est maintenu constant de sorte que les cristaux formés dans la phase de séchage peuvent augmenter la température de manière homogène, le temps de réaction étant de 2 heures ;
6) lixiviation aqueuse, où deux nouveaux complexes sont obtenus dans cette étape, l'un étant liquide et comprenant du zinc et l'autre étant insoluble et essentiellement constitué d'hématite, de gypse et d'oxydes de plomb ainsi que d'autres oxydes mineurs, effectuée à 260 tr/min et 70 °C dans des cuves encapsulées avec un système d'extraction de vapeur d'eau par évaporation et selon un rapport solide/liquide de 1 à 3,6, le temps de lixiviation étant compris entre 1 heure et 1 heure et 30 minutes ;
7) récupération du zinc, où le zinc est obtenu à cette étape selon deux formes préférées à obtenir, la première sous la forme de sulfate de zinc au moyen d'une évaporation et d'une cristallisation, et la seconde sous la forme de cathodes de zinc par électrodéposition ;
8) flottation, où, dans cette étape, l'hématite est séparée des oxydes de plomb et de divers oxydes métalliques en très faible quantité, tels que, par exemple, le cadmium, le nickel, les oxydes d'arsenic ; le solide issu de la phase de lixiviation est insoluble dans des conditions normales, comprenant de l'hématite et des oxydes de plomb, du sulfate de calcium (gypse) et de l'argent ;
9) séparation magnétique, où, dans cette étape, l'hématite contient encore du gypse (CaSO4.2H₂O), où le gypse doit être séparé de l'hématite en raison de la nécessité d'utiliser de l'hématite réduite (Fe°) comme matériau d'alimentation du four à arc électrique, il est nécessaire d'éliminer le gypse, pour lequel la séparation magnétique est utilisée, en profitant du large delta de susceptibilité magnétique existant entre l'hématite (35x10³ SI) et le gypse (-0,11x10³ SI), à de faibles vitesses comprises entre 0,7 pied/min et 0,8 pied/min du séparateur magnétique et à une densité de flux magnétique comprise entre 19 000 gauss et 21 000 gauss ;
10) une étape de récupération des gaz, qui comprend l'utilisation d'un système catalytique classique pour la récupération de SO₃/SO₂, capturant les gaz dans des solutions diluées de H₂SO₄ (à 70 %) en présence de catalyseurs, la solution de capture est ajoutée au stock d'acide sulfurique de l'étape, ledit système catalytique classique ayant des dissipateurs thermiques à air forcé et étant encapsulé ;
11) une étape de lavage des gaz, dans laquelle les gaz du système comprennent de l'air, de l'O₂ et du CO₂, et des poussières entraînées avec ceux-ci, l'étape comprend le passage des gaz du système à travers un système de lavage des gaz qui retient les particules, forçant les gaz et les particules à passer à travers un brouillard d'eau et des pulvérisations à contre-courant (1,2 m³ par m³ de gaz), de manière répétée, avec plusieurs colonnes et serpentins de lavage, les gaz passant à travers des filtres ultrafins avant de quitter l'étape, de sorte à garantir qu'il n'y a pas de perte de solides ;
12) récupération de boue du collecteur, où la perte de poussières en raison de leur nature ultrafine est empêchée dans cette étape, et elle consiste à manipuler la boue de ces particules provenant de tous les réacteurs et systèmes d'écoulement qui sont encapsulés et capturent les particules fugitives qui, car les différents systèmes sont en circuit fermé, produisent finalement une boue, ainsi que de la vapeur d'eau qui entraîne également une partie minimale de particules, qui sont capturées dans le système d'évaporation sous vide et envoyées vers le collecteur de boue ; cette boue est filtrée par deux pompes jumelles avec des membranes en résine phénolique à une pression de 3,5 bar, la première avec une membrane de 5 micromètres et la seconde avec une membrane de 2,5 micromètres ;
13) purification de liquide, cette étape consistant **en ce qu'**une unité de décontamination d'eau reçoit des flux de liquide contenant des anions, des cations, une suspension de particules solides ultrafines provenant du procédé de lavage de poussières, du procédé de lavage des gaz, du collecteur de boue et les flux de liquide de la phase de flottation (concentré et résidus) et éventuellement du procédé de nettoyage et d'entretien pour un quelconque réacteur, et consiste en un système de séparation ionique chimique, une filtration sur membrane à haute pression, une évaporation sous vide, un renvoi de l'eau propre vers le procédé industriel d'eau condensée, une cristallisation des contaminants ; les solides sont intégrés (précipités, boue et cristaux), homogénéisés et ajoutés au concentré de plomb/argent pour leur commercialisation respective.

2. Procédé hydrométallurgique selon la revendication 1, **CARACTÉRISÉ en ce qu'**à l'étape 1) la teneur en zinc est déterminée et est de 12 % à 35 % et la teneur en fer est déterminée et est de 17,26 % à 28,26 %.

3. Procédé hydrométallurgique selon la revendication 1, **CARACTÉRISÉ en ce qu'**à l'étape 2) une réduction de Cl de plus de 95 % est obtenue, en conséquence, des réductions très importantes de Na, Mg, Ba sont obtenues, obtenant généralement une réduction moyenne de 17 % en poids de la teneur initiale en poussières (en fonction des teneurs en éléments dans chaque cas spécifique).

4. Procédé hydrométallurgique selon la revendication 1, **CARACTÉRISÉ en ce que** l'étape 3) ne produit pas de liquides sous quelconque forme que ce soit, et la vapeur d'eau et le brouillard acide produits vont vers les systèmes de récupération de SO₂/SO₃ et réintègrent le système de stockage d'acide sulfurique du procédé en circuit fermé.

5. Procédé hydrométallurgique selon la revendication 4, **CARACTÉRISÉ en ce qu'**à l'étape 3), les molécules d'oxyde sont décomposées, remplaçant l'oxygène dans les molécules par le composé typique SO₄.

6. Procédé hydrométallurgique selon la revendication 1, **CARACTÉRISÉ en ce que** l'étape 4) dure environ 10 minutes et permet l'élimination de l'eau pour empêcher un choc thermique à l'étape suivante et pour garantir la réaction complète du nouveau complexe de sulfure.

7. Procédé hydrométallurgique selon la revendication 1, **CARACTÉRISÉ en ce qu'**à l'étape 5), la réaction de thermolyse (décomposition thermique) du sulfate de fer a lieu en tant que réaction principale, qui produit la formation d'hématite, avec la production correspondante de SO₂ et d'O₂, selon la réaction : 4FeSO₄ = 2Fe₂O₃ + O₂ + 4SO₂.

8. Procédé hydrométallurgique selon la revendication 7, **CARACTÉRISÉ en ce que** la réaction est effectuée à pression normale, les gaz générés sont envoyés vers le système de nettoyage des gaz et de capture de SO2, qui est ajouté au stock d'acide sulfurique du procédé, en plus de la réaction de décomposition thermique du fer, où les oxydes ayant une énergie de formation inférieure par rapport au fer sont également décomposés, comme dans le cas de Pb, Ag, Si, Mn, P, Sn, Cd, Ni, Bi.

9. Procédé hydrométallurgique selon la revendication 7, **CARACTÉRISÉ en ce qu'**à l'étape 5) de l'hématite et des oxydes insolubles et du zinc soluble sous la forme de sulfate sont formés, et le sulfate de zinc est envoyé vers une trémie encapsulée où il est refroidi à 70 °C.

10. Procédé hydrométallurgique selon la revendication 1, **CARACTÉRISÉ en ce qu'**à l'étape 6), l'eau de lixiviation provient du système d'eau condensée, qui est un système à contre-courant, de sorte que les solides sont solubilisés et perdent du zinc, alors que la solution augmente en termes de teneur en zinc et en termes de teneur en Mn et en Ca.

11. Procédé hydrométallurgique selon la revendication 10, **CARACTÉRISÉ en ce que** le lixiviat d'eau ne contient aucun type de produit chimique réactif, ce qui les empêche d'être solubles dans le solide comprenant l'hématite, et remplace les pertes d'eau dues à l'évaporation.

12. Procédé hydrométallurgique selon la revendication 10 ou 11, **CARACTÉRISÉ en ce que** la phase de lixiviation aqueuse produit l'extraction très efficace du zinc, produisant une solution qui, en moyenne, titre 56 g de Zn par litre, avec une petite quantité d'autres composants, où les solides sont, pour la plupart, de l'hématite et d'autres oxydes métalliques tels que les oxydes de calcium et de plomb.

13. Procédé hydrométallurgique selon la revendication 12, **CARACTÉRISÉ en ce que** les solides sont très fins et qu'un système de filtration par pompe à haute pression est nécessaire pour une séparation efficace de la solution lixiviée, générant deux nouveaux complexes, l'un étant liquide et comprenant du zinc et l'autre comprenant de l'hématite, du gypse et des oxydes de plomb ainsi que d'autres oxydes mineurs, qui sont envoyés vers le procédé de flottation, et les liquides sont envoyés vers le système de récupération de zinc (évaporation - cristallisation/électrodéposition), où il est essentiel de maintenir la température du flux liquide à 70 °C, qui est déplacé par impulsion péristaltique.

14. Procédé hydrométallurgique selon la revendication 1, **CARACTÉRISÉ en ce que**, dans un premier mode de réalisation préféré, à l'étape 7 (récupération de Zn), du sulfate de zinc est produit, et le liquide comprenant du zinc est préalablement évaporé sous vide, cette opération étant réalisée dans un évaporateur sous vide classique dans lequel le volume d'eau est réduit de 96 %, envoyant la vapeur d'eau vers le système de condensation, d'où l'eau est recyclée vers les différents besoins en eau du procédé.

15. Procédé hydrométallurgique selon la revendication 1, **CARACTÉRISÉ en ce qu'**à l'étape 12), les solides obtenus sont ajoutés au concentré de plomb/argent, empêchant ainsi la génération de déchets, une opération qui n'affecte pas la qualité du concentré, et le liquide résultant a une teneur ionique, et est donc envoyé vers l'unité de purification de liquide.
